# EUROPEAN PATENT SPECIFICATION

(11) **EP 3 183 482 B1**
(45) Date of publication and mention of the grant of the patent: **23.02.2022**
(21) Application number: 15775483.9
(22) Date of filing: 18.08.2015
(51) Int. Cl.: B29C 45/16, B29L 31/00, F16K 5/04

(54) **A MINI VALVE FOR LOW PRESSURE APPLICATIONS CORE WITH EMBEDDED SEALING MATERIAL AND A DOUBLE INJECTION METHOD FOR MAKING SAME**
MINIVENTIL FÜR NIEDERDRUCKANWENDUNGSKERN MIT EINGEBETTETEM DICHTUNGSMATERIAL UND DOPPELINJEKTIONSVERFAHREN ZUR HERSTELLUNG DAVON
COEUR DE MINI-VANNE POUR APPLICATIONS BASSE PRESSION À MATÉRIAU D'ÉTANCHÉITÉ INCORPORÉ ET PROCÉDÉ DE DOUBLE INJECTION POUR RÉALISER CELUI-CI

(30) Priority: 19.08.2014 US 201462038986 P
(43) Date of publication of application: 28.06.2017
(73) Proprietor: Elysee Piping Systems Limited, London NW8 9TT (GB)
(72) Inventor: PROTOPAPAS, Panos, 1022 Nicosia (CY)
(74) Representative: Müller Schupfner & Partner Patent- und Rechtsanwaltspartnerschaft mbB
(86) International application number: PCT/IB2015/001388
(87) International publication number: WO 2016/027150

(56) References cited:
- EP-A1- 1 023 982
- WO-A1-2006/119552
- WO-A2-02/29295
- DE-A1- 19 728 234
- DE-U1- 20 017 044
- US-A- 4 494 730
- US-A- 4 778 152

## Description

When producing fittings using injection methods, good quality is ensured by designing molds which fit the purpose and using materials, which combine required strength and processability. However, since the fitting is made up of several parts, with different properties due to their purpose, some fixed and some moving, the molded parts have to be assembled to create the final product. Assembly work can be time consuming and, due to complexity, in many cases involves manual work with a high cost. It is also needed to add quality control on the purchased parts (O-rings) to ensure supplier's quality is appropriate and on the final assembled parts to ensure that the O-rings are assembled correctly.

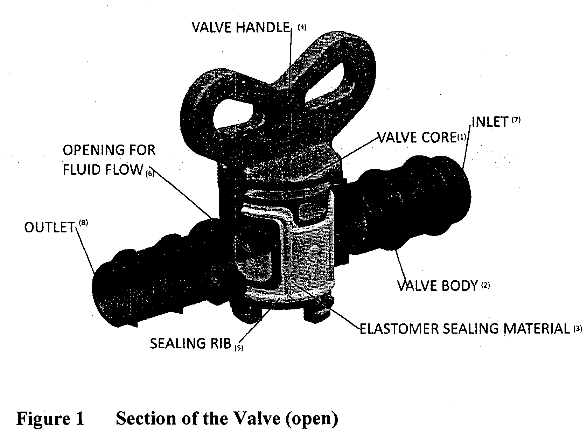

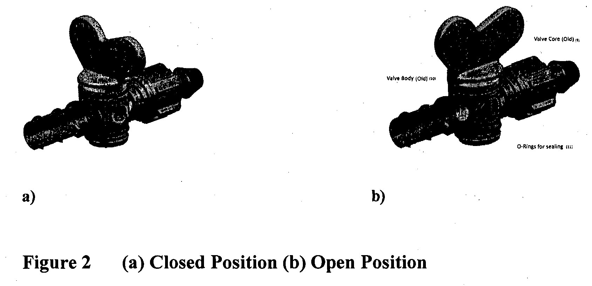

The original Mini Valve for Low Pressure Applications is made of three parts: The Valve Core (Old) (9), the Valve Body (Old) (10) and the four o-rings for sealing (11) (see Figure 2). The Valve Core (Old) (9) and the Valve Body (Old) (10) are produced in-house, while the o-rings for sealing (11) are purchased from external suppliers.

The positioning of the O-rings is critical to the sealing of the valve; if one of the O-rings is out of position the valve will leak water. Since the o-rings are held in place by their own elasticity, automatic assembly which ensures correct sealing is extremely difficult and, if achieved, not cost effective. The Operation is therefore, done manually with customized assembly jigs.

Production is done in two steps:
a. The Valve Core (Old) (9) and the Valve Body (Old (10) are created separately by standard injection molding.
b. The 6 parts are manually assembled by:
   i. Threading the two large o-rings;
   ii. Pressing the small o-rings into the grooves (ensuring they do not fall out);
   iii. Inserting the Valve Core (Old) (9) with the o-rings for Sealing (11) into the Valve Body (Old) (10); and,
   iv. Securing the Valve Core (Old) (9) with the Valve Body (Old) (10) by a manual pressing device.

Though the process is simple, it is relatively time consuming and therefore costly compared to the added value of the assembly. There is also a risk that some of the o-rings are assembled wrongly, thus causing leakage, which then increases the need for quality controls to find possibly leaking Mini Valve for Low Pressure Applications.

The documents WO 0229295A2, EP 1 023 982 A1, DE 200 17044 U1 and US 4,494,730A disclose valves in which the core or plug part of the valve comprises sealing material that is moulded onto the core material of the valve core or plug, in particular by over-moulding techniques.

The invention is a mini valve for low pressure applications according to claim 1. The invention covers also the method of claim 3.

The idea of the new invention is to produce the Valve Core and the Sealing Material in one process and thereby reduce the number for assembly steps by:
a. Ensuring that the sealing material is always in the correct position and of the appropriate quality, without having to make dedicated quality control steps to ensure proper sealing;
b. Designing a new locking mechanism of Body/ Core for automatic assembly; and,
c. Removing the need for manual assembly of o-rings for Sealing (11).

The assembly is simplified to one step - simply inserting the Valve Core with the elastomer sealing material into the Valve Body. This .way the assembly process can be automated easily.

The figures show photographs of the invention or partial views of the invention.

The Valve Core (Old) (9) of the standard Mini Valve for Low Pressure Applications is made of polypropylene, to ensure the properties required for endurance, stiffness and pressure resistance; the o-ring is made of a rubber material for sealing purposes. Due to the different materials, they cannot be produced together in a standard injection process, but have to be produced in two separate processes. To enable the sealing material and the Valve Core to be produced together, a New Valve Core (1) is designed, where the sealing material (3) will be adhered to the core, during a Double Injection operation.

The new Mini Valve for Low Pressure Applications has a cylindrical Valve Body (2) with an internal chamber with inlet (7) and outlet (8) openings. A two-component plastic New Valve Core (1) which is rotatable is positioned in the chamber to control the flow of fluid through the valve.

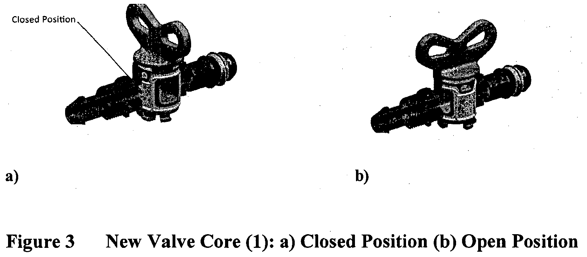

The two-component Valve Core (1) is made by polypropylene to which a thin layer of thermoplastic elastomer is added on the outer surface of the Core by double injection techniques. More specifically, the thermoplastic elastomer is added on the interference surface of the Valve Core (1) to seal between the cylindrical Valve Body (2) and the Valve Core (1), so that we get a watertight sealing between the two parts. The thin layer of thermoplastic elastomer is following the cylindrical shape of the Valve Core (1) and the sealing is ensured by a Continuous rectangular protrusion - the Sealing Rib (5) which is placed on each surface-edge connected all-around forming a rib to ensure proper sealing in both open and closed position (see figure 3). The dimensions of the rectangular rib are specific in order to achieve optimum sealing interference with effortless functionality, without increasing the required operational torque. The special designed layer of thermoplastic elastomer will ensure watertight control of both inlet and outlet radial openings of the Valve Body (2).

The Sealing Rib (5) of the Sealing Material (3) is also ensuring permanent water tightness in the direction of the insertion of the Valve Core (1). The flow of fluid through the valve is accommodated by a squared passage running radial through the Valve Core (1), which when in open position allows flow of a liquid throughout the Inlet (7) to the Outlet (8) openings of the cylindrical Valve Body (2).

The two-component plastic New Valve Core (1) extends upwards through the chamber where the open-close mechanism is and downwards where the locking mechanism is. The open-close mechanism operates with a special designed Valve Handle (4) which is an extension of the Valve Core (1) molded together as one part. The two-component plastic New Valve Core (1) has open and closed positions and any other position between, with the aim of controlling the delivered quantity of liquid. The mechanism locking the New Valve Core (1) to the Valve

Body (2) is also an extension of the core, molded as a whole, and consists of four cantilever hooks which lock on the bottom of the cylindrical Valve Body (2) portion.

The body of the two-component plastic New Valve Core (1) has specially designed grooves for better bonding with the thermoplastic elastomer layer. The two-component plastic New Valve Core (1) is produced by a single molding process, using the double injection technique which allows molding and bonding two kinds of plastic materials through a single process but in a separate injection instance and location.

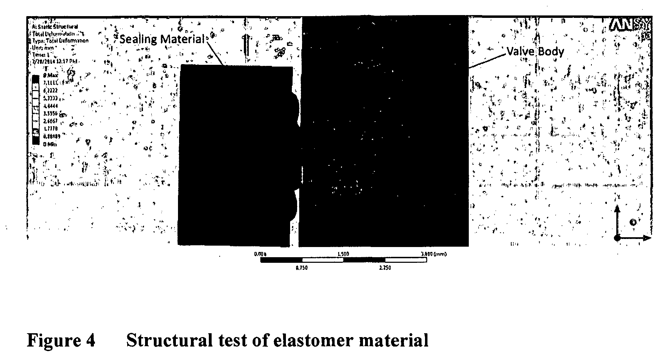

The material used in the Sealing Material (3) is an elastomer which will deform when being subjected to the pressure from the inner wall of the Valve Body (2) while inserting the Valve Core (1) to the Valve Body (2). The size of the sealing material protrusion is calculated to ensure that the deformation of the sealing material leaves a large enough surface with enough pressure onto the Valve Body (2) to ensure sealing under pressure of up to 8 Bar without increasing the friction between the parts so that opening/ closing movements become difficult (Figure 4).

## Claims

1. A mini valve for low pressure applications, comprising
a cylindrical valve body (2) with an internal chamber with inlet (7) and outlet (8) openings,
a two-component plastic valve core (1) which is positioned rotatable in the chamber,
wherein a sealing material (3) is adhered to the core (1),
wherein the sealing material (3) forms a sealing rib (5), which follows the cylindrical shape of the valve core (1) and forms a continuous rectangular protrusion,
wherein the sealing rib (5) which is placed on each surface-edge of the core (1) connected all-around,
**characterized by**:
an open-close mechanism with a valve handle (4) which is an extension of the valve core (1) molded together as one part, and by
a locking mechanism locking the valve core (1) to the valve body (2) which is formed as an extension of the core (1) and is molded as a whole with the core,
wherein the locking mechanism comprises four cantilever hooks adapted to lock on the bottom of the cylindrical valve body (2).

2. The mini valve according to claim 1,
wherein the sealing material (3) is a thermoplastic elastomer layer,
wherein the valve core (1) comprises grooves adapted to bond with the sealing material (3).

3. A method for producing a mini valve according to claim 1 or 2
wherein producing the valve core (1) comprises the use of a single operation double injection process,
wherein a first injection stage is to shape the polypropylene valve core (1) of the valve with the valve handle (4) and the locking mechanism, both formed as extensions of the valve core (1), and,
wherein the second injections stage is the application and adhering of a thermoplastic elastomer sealing material (3) to the surface of the polypropylene valve core (1),
wherein the sealing material (3) comprises a protruded sealing rib (5) at the edges of the area of the sealing material (3),
wherein the process does not comprise manual assembly of o-rings for sealing, and
wherein the valve core (1) comprises a valve handle (4) which is an extension of the valve core (1) and is molded together with the valve core (1) as one part.

## Patentansprüche

1. Ein Mini - Ventil für Niederdruckanwendungen, bestehend aus einem zylindrischen Ventilkörper (2) mit einer inneren Kammer mit Einlass- (7) und Auslassöffnungen (8),
einem Zweikomponenten-Kunststoff-Ventilkern (1), der drehbar in der Kammer angeordnet ist,
wobei ein Dichtungsmaterial (3) auf den Ventilkern (1) aufgeklebt ist,
wobei das Dichtungsmaterial (3) eine Dichtungsrippe (5) bildet, die der zylindrischen Form des Ventilkern (1) folgt und einen durchgehenden rechteckigen Vorsprung bildet,
wobei die Dichtungsrippe (5), die an jeder Oberflächenkante des Kerns (1) angebracht ist, umlaufend verbunden ist,
**gekennzeichnet durch**:
einen Öffnungs- / Schließmechanismus mit einem Ventilgriff (4), der eine Verlängerung des Ventilkerns (1) und einstückig mit diesem geformt ist, und durch
einen Verriegelungsmechanismus, der den Ventilkern (1) mit dem Ventilkörper (2) verriegelt und welcher als eine Verlängerung des Ventilkerns (1) ausgebildet ist und als Einheit mit dem Kern geformt ist, wobei der Verriegelungsmechanismus vier hervorstehende Haken umfasst, die dafür vorgesehen sind, am Boden des zylindrischen Ventilkörpers (2) einzugreifen.

2. Das Mini - Ventil nach Anspruch 1,
wobei das Dichtungsmaterial (3) eine thermoplastische Elastomerschicht ist, wobei der Ventilkern (1) Nuten aufweist, die zur Verbindung mit dem Dichtungsmaterial (3) ausgelegt sind.

3. Verfahren zur Herstellung eines Mini - Ventils nach Anspruch 1 oder 2,
wobei die Herstellung des Ventilkerns (1) die Anwendung eines einfachwirkenden Doppelspritzverfahrens umfasst,
wobei in einem ersten Spritzschritt der Polypropylen - Ventilkern (1) des Ventils mit dem Ventilgriff (4) und dem Verriegelungsmechanismus, welche beide als Verlängerungen des Ventilkerns (1) ausgebildet sind, geformt wird, und,
wobei die zweite Injektionsstufe das Aufbringen und Aufkleben eines thermoplastischen Elastomer - Dichtungsmaterials (3) auf die Oberfläche des Polypropylen - Ventilkerns (1) ist,
wobei das Dichtungsmaterial (3) an den Rändern des Bereichs des Dichtungsmaterials (3) eine vorstehende Dichtungsrippe (5) aufweist, wobei das Verfahren keine manuelle Montage von O-Ringen zur Abdichtung umfasst, und
wobei der Ventileinsatz (1) einen Ventilgriff (4) umfasst, der eine Verlängerung des Ventileinsatzes (1) ist und zusammen mit dem Ventileinsatz (1) als ein Teil geformt ist.

## Revendications

1. Mini-vanne pour des applications à basse pression, comprenant
un corps de vanne cylindrique (2) ayant une chambre interne avec des ouvertures d'entrée (7) et de sortie (8),
un cœur de vanne en plastique à deux composants (1) qui est positionné de manière rotative dans la chambre,
dans laquelle
un matériau d'étanchéité (3) est collé au cœur (1),
le matériau d'étanchéité (3) forme une nervure d'étanchéité (5) qui suit la forme cylindrique du cœur de vanne (1) et forme une saillie rectangulaire continue,
la nervure d'étanchéité (5) placée sur chaque bord de la surface du cœur (1) est connectée tout autour,
**caractérisée par** :
un mécanisme d'ouverture-fermeture comprenant une poignée de vanne (4) qui est un prolongement du cœur de vanne (1), moulés ensemble comme une seule pièce, et par
un mécanisme de verrouillage verrouillant le cœur de vanne (1) au corps de vanne (2), qui est formé comme un prolongement du cœur (1) et qui est moulé comme un tout avec le cœur,
le mécanisme de verrouillage comprend quatre crochets en porte-à-faux adaptés pour se verrouiller sur le fond du corps de vanne cylindrique (2).

2. Mini-vanne selon la revendication 1,
dans laquelle le matériau d'étanchéité (3) est une couche en élastomère thermoplastique,
le cœur de vanne (1) comprend des rainures adaptées pour se lier avec le matériau d'étanchéité (3).

3. Procédé de fabrication d'une mini-vanne selon la revendication 1 ou 2, dans lequel la fabrication du cœur de vanne (1) consiste à utiliser un processus d'injection double à opération unique,
dans lequel
une première étape d'injection consiste à former le cœur de vanne en polypropylène (1) de la vanne avec la poignée de vanne (4) et le mécanisme de verrouillage, tous deux formés comme des prolongements du cœur de vanne (1), et
la deuxième étape d'injection consiste à appliquer et à coller un matériau d'étanchéité en élastomère thermoplastique (3) à la surface du cœur de vanne en polypropylène (1),
le matériau d'étanchéité (3) comprend une nervure d'étanchéité en saillie (5) sur les bords de la zone du matériau d'étanchéité (3),
le procédé ne comprend pas l'assemblage manuel de joints toriques pour assurer l'étanchéité, et
le cœur de vanne (1) comprend une poignée de vanne (4) qui est un prolongement du cœur de vanne (1) et est moulée ensemble avec le cœur de vanne (1) comme une seule pièce.
